# EUROPEAN PATENT SPECIFICATION

(11) **EP 4 500 605 B1**
(45) Date of publication and mention of the grant of the patent: **25.11.2026**
(21) Application number: 23713352.5
(22) Date of filing: 21.03.2023
(51) Int. Cl.: H01M 8/04029, H01M 8/04302, B60L 1/00, B60L 3/00, B60L 58/33, B60L 58/34, B60H 1/00, B60H 1/22, H01M 8/0432, H01M 8/04701, H01M 10/6567

(54) **A METHOD FOR CONTROLLING A TEMPERATURE OF A FUEL CELL SYSTEM**
VERFAHREN ZUM REGELN DER TEMPERATUR EINES BRENNSTOFFZELLENSYSTEMS
PROCÉDÉ DE RÉGULATION DE LA TEMPÉRATURE D'UN SYSTÈME DE PILE À COMBUSTIBLE

(30) Priority: 28.03.2022 EP 22164731
(43) Date of publication of application: 05.02.2025
(73) Proprietor: VOLVO TRUCK CORPORATION, 405 08 Göteborg (SE)
(72) Inventor: ARYA, Pranav, 437 42 LINDOME (SE)
(74) Representative: Kransell & Wennborg KB
(86) International application number: PCT/EP2023/057133
(87) International publication number: WO 2023/186614

(56) References cited:
- WO-A2-2004/049488
- US-A1- 2018 170 210
- US-A1- 2022 029 182

## Description

### TECHNICAL FIELD

The present disclosure relates to a method for controlling a temperature of a fuel cell system of a vehicle. The present disclosure also relates to a control unit for controlling a temperature of a fuel cell system of a vehicle. Moreover, the disclosure relates to a vehicle comprising such a control unit.

The present disclosure may typically be applied in a fuel cell system used as a part of an electric driveline of heavy-duty vehicles, such as trucks, buses, and construction equipment. The present disclosure may likewise be applied in other vehicles such as cars and other light-weight vehicles etc., but also in marine vessels and the like. Other applications are also possible, such as the application of the present disclosure in a stationary power plant system.

### BACKGROUND

With the introduction of new energy storage systems in various types of vehicles, such as batteries and fuel cells in heavy-duty vehicles, there has been an increasing activity for developing new and adequate solutions for reliable operations of such systems, but also for other vehicle systems interacting with such systems. One area of particular interest in heavy-duty fuel cell electric vehicles is the coolant system and the control of the coolant system in an electrical vehicle.

Moreover, in the field of fuel cell systems, there is an increasing demand for improving the efficiency of handling heat generated in the fuel cells during operation of the fuel cell system. To this end, the fuel cell system generally includes a thermal management system, also commonly denoted as a coolant system, with the purpose of maintaining the operating temperature of the fuel cell stack at its optimal temperature. Currently, there is a number of different cooling techniques used in fuel cells, including the use of air and liquid cooling medium or phase change. In the field of fuel cell systems for vehicles, typically using high power fuel cell stacks, the coolant system is generally provided in the form of a liquid coolant system since the heat transfer coefficients for liquid flow are typically higher compared to heat transfer coefficients for air flow.

In these types of liquid coolant systems for vehicle fuel cell systems, the coolant flow paths may generally also be integrated in the bipolar plates of the fuel cells. However, the coolant may also flow in other ways around or within the fuel cell stack of the fuel cell system. According to their Abstracts, US 2018/170210 A1, US 2022/029182 A1, and WO 2004/049488 A2 disclose examples of various fuel cell systems.

While there are a number of different types of thermal management systems for fuel cell systems of vehicles, there still remains a need for an improved control of the temperature of the fuel cell stack(s) forming the fuel cell system. In addition, it would be desirable to further improve the overall performance of the fuel cell system during operation of the vehicle.

### SUMMARY

An object of the disclosure is to provide an improved method for controlling a temperature of a fuel cell system of a vehicle, in which a heater associated with the fuel cell system can be operated on the basis of the operation of the fuel cell system. The object is at least partly achieved by a method according to claim 1. The object is also achieved by the other independent claims. The dependent claims are directed to advantageous embodiments of the disclosure.

According to a first aspect of the disclosure, there is provided a method for controlling a temperature of a fuel cell system, FCS, of a vehicle. The FCS comprises at least one fuel cell and a thermal management system for the at least one fuel cell. The thermal management system comprises a fluid circuit for circulating a coolant. Further, the thermal management system comprises a heater arranged to regulate a temperature of the coolant.

The method comprises predicting an FCS power demand for a given time horizon; predicting a power capability of the FCS for the given time horizon; and, on the basis of the predicted power capability of the FCS and the predicted FCS power demand, operating the heater so as to control the temperature of the FCS during the given time horizon.

The proposed method is at least partly based on the insight that the temperature of the FCS may generally have an effect on the possible power capability of the FCS. In particular, it has been observed that the maximum power level of the FCS, generally corresponding to the power capability, that can be delivered from the FCS is directly dependent on the operating temperature of the FCS. At least for these reasons, the power capability is relatively low at a start-up of the FCS during cold conditions, while it may generally increase as the FCS heats up. Accordingly, there is a particular challenge for starting an FCS of a heavy-duty vehicle at cold conditions.

In order to manage the thermal variation of the FCS during cold start-up of the FCS, an ordinary FCS cooling system may include a heater operable to heat up the fuel cells, thus facilitating the start of the FCS during freezing conditions.

The heater of the thermal management system may be controlled to operate at full power to bring a faster heat up, which is used during freezing conditions. The heater may then generally be deactivated when the coolant temperature reaches a certain temperature value. After the coolant temperature has reached such certain temperature value, the FCS may be started up and an optional bypass path may be used to heat up the FCS. The thermal management system may thus optionally also comprise a controllable by-pass valve to heat up the system faster.

Once the desired operating temperature of the FCS is reached, the flow of coolant can be controlled e.g. by a control flow valve assembly so as to flow through a heat exchanger disposed in another separate coolant flow path from the heater. Such heat exchanger may be arranged in a front of the vehicle. The heater may typically be disposed in the by-pass channel, although other types of arrangement of the by-pass channel may be contemplated.

The proposed method allows for improving the control of such heater in the thermal management system so as to increase the power capability of the FCS in a faster manner by providing an improved predictive temperature control. The proposed method is different to hitherto known prior art methods, which generally focus on ensuring a fast convergence of a current fuel cell temperature towards a target fuel cell temperature. That is, the proposed method provides for an improved and efficient control of the heater, which is based on predicted power capability of the FCS and predicted FCS power demand. To this end, it becomes possible to better estimate and determine an appropriate target temperature for the fuel cells. A number of examples of such predictive control will be described in the following.

The proposed method and thermal management systems may generally use a coolant fluid medium for transferring heat from the FCS. By using a heater arranged in fluid communication with the coolant circulating in the fluid circuit, the method and thermal management system may also use the coolant fluid medium for transferring heat to the FCS at start-up and/or at cold conditions. However, it may also be possible to heat parts of the FCS without using a coolant. Hence, the proposed method can be applied and implemented in several different types of thermal management systems for fuel cell systems of vehicles.

The term "power capability" of the FCS, as used herein, may generally refer to a maximum power that the FCS can supply over the given time horizon.

By way of example, the step of predicting a power capability of the FCS for the given time horizon may be initiated if a current temperature of the coolant is below a coolant temperature setpoint. In other words, if the determined current coolant temperature is below the coolant temperature setpoint, the method may proceed to perform an operation of predicting the FCS power capability for the given time horizon.

The term "coolant temperature setpoint" may generally refer to a predetermined value indicative of a temperature threshold value for the heater. By way of example, the coolant temperature setpoint refers to a nominal setpoint, e.g. a predetermined normal operating coolant temperature. The coolant temperature setpoint may in other examples be set to a maximum allowable coolant temperature. By way of example, the coolant temperature setpoint is a predetermined temperature value stored in a control unit.

The method may further comprise determining the current temperature of the coolant and comparing the determined current coolant temperature with the coolant temperature setpoint.

If the determined current coolant temperature is above the coolant temperature setpoint, the method may further comprise controlling the heater into a deactivated state. By way of example, the deactivated state refers to a state where the heater is shut down and thus not operable to produce heat. In this manner, the thermal management system is operated in an even more efficient manner in comparison to hitherto known methods and systems. Further, by shutting down the heater once crossing the temperature setpoint may provide for a more precautionary operation, thus avoiding an overheat of the system.

The power capability of the FCS can be predicted in several different ways. By way of example, predicting a power capability of the FCS for the given time horizon may comprise estimating an expected evolvement of the temperature of the FCS if the FCS is operated according to the predicted FCS power demand during the given time horizon. In this manner, it becomes possible to determine if the FCS power request estimation is at any time greater than the estimated power capability.

In addition, or alternatively, the provision of predicting a power capability of the FCS for the given time horizon may comprise determining state-of-health, SOH, of the FCS. In this manner, it becomes possible to determine the available, or maximum, FCS power capability in an even more precise manner.

Typically, predicting a power capability of the FCS for the given time horizon may comprise reducing the power capability of the FCS based on the determined SOH. As such, predicting a power capability of the FCS for the given time horizon may comprise reducing the power capability of the FCS based on the determined SOH to a reduced maximum power capability.

In at least one example, the method may comprise predicting a power capability of the FCS for the given time horizon, wherein predicting the power capability of the FCS for the given time horizon may comprise determining the SOH of the FCS and, based on the determined SOH of the FCS, further estimating an expected evolvement of the temperature of the FCS if the FCS is operated according to the predicted FCS power demand during the given time horizon, and on the basis of the predicted power capability of the FCS and the predicted FCS power demand, operating the heater so as to control the temperature of said FCS during said time horizon.

By way of example, the method may comprise determining the SOH of the FCS and comparing the determined SOH with a threshold value. If the determined SOH of the FCS is below the threshold value, the method may comprise reducing the predicted maximum power capability of the FCS for the given time horizon with a predetermined value. This provision may generally be performed prior to estimating the expected evolvement of the temperature of the FCS if the FCS is operated according to the predicted FCS power demand during the given time horizon.

Alternatively, or in addition, predicting the power capability of the FCS for the given time horizon may comprise adjusting the power capability based on the determined SOH of the FCS. By way of example, the power capability of the FCS is reduced to a lower maximum power capability value based on the determined SOH of the FCS. In one example, the power capability of the FCS is reduced with a pre-determined value to a lower maximum power capability value based on the determined SOH of the FCS. The pre-determined value can be derivable from a look-up table or the like for the FCS operational characteristics.

The method may further comprise comparing the predicted FCS power demand with the predicted FCS power capability; and if the predicted FCS power demand is above the predicted FCS power capability at any point of time in the time horizon, the method further comprising operating the heater in response to the comparison so as to control the temperature of the FCS during the time horizon. In this manner, the proposed method provides for an efficient and reliable control of the power capability of the FCS.

The method can be performed at several different occasions when operating the vehicle and the FCS. Favourably, the method may be performed at a start-up of the FCS. In this manner, the proposed method provides for a faster increase in the power capability of the FCS after the start-up.

Typically, the method may further comprise receiving a control signal indicative of an FCS start-up. The control signal may generally be received at the control unit.

The provision of predicting the FCS power demand for a given time horizon may at least partly be based on route information describing at least a route segment from a starting point to an end point. In this manner, an even more improved and dynamic method for predicting the power request from the FCS can be provided. Thus, by using route information, it becomes possible to determine the power demand from the FCS with a better accuracy.

The route information may contain any one of an indication of a speed limit, road type, road elevation profile, construction work, traffic flow.

The provision of predicting the FCS power demand for a given time horizon may at least partly be based on a previous FCS power demand profile for the route segment. In this manner, an even more improved and reliable method for predicting the power request from the FCS can be provided.

The previous FCS power demand profile for the route segment may be based on any one of previous vehicle operating cycle statistics and driver characteristics. In this manner, an even more improved and reliable method for predicting the power request from the FCS can be provided.

The provision of predicting the FCS power demand for a given time horizon may at least partly be based on data relating to environmental conditions. In this manner, an even more improved method for predicting the power request from the FCS can be provided. According to at least one example embodiment, the method further comprises receiving data relating to environmental conditions. The data may refer to a weather forecast and may for example be received from a remote server, for example using a network connection, such as the Internet. The data may alternatively be received using a radio connection.

In addition, or alternatively, the provision of predicting the FCS power demand for a given time horizon may at least partly be based on data indicative of the gross combination weight of the vehicle. In this manner, an even more improved method for predicting the power request from the FCS can be provided.

According to one example embodiment, the steps of the method are performed in a sequence. However, at least some of the steps of the method can be performed concurrently. The method according to the example embodiments can be executed in several different manners. As mentioned above, the example embodiments of the method and the sequences of the methods, typically corresponding to the steps of the method, are executed by the control unit. In one example embodiment, any one of the steps of the method is performed by the control unit during use of the vehicle. The method may be continuously running as long as the vehicle is operative. The sequences of the method may likewise be performed by other types of components and by other technologies as long as the method can provide the associated functions and effects.

According to a second aspect of the disclosure, there is provided a control unit for a vehicle. The control unit is arranged in communication with a fuel cell system, FCS, of the vehicle, and configured to perform a method according to the first aspect and/or any one of the steps of the first aspect.

The control unit may be an integral part of the vehicle or a separate part in communication with the vehicle.

Effects and features of the second aspect of the disclosure are largely analogous to those described above in connection with the first aspect.

According to a third aspect of the disclosure, there is provided a vehicle comprising a fuel cell system, FCS and further a control unit according to the second aspect. Effects and features of the third aspect of the disclosure are largely analogous to those described above in connection with the first aspect and the second aspect.

The vehicle may be an electric vehicle, such as a fully or hybrid electrical vehicle, and further comprising an energy storage system and an electric propulsion system. The vehicle may be an electrical, hybrid, or plug-in hybrid vehicle. The vehicle may comprise an electric machine, wherein the FCS and the energy storage system provide power to the electric machine for providing propulsion for the electrical, hybrid, or plug-in hybrid vehicle.

The fluid circuit may further comprise a coolant pump for circulating the coolant in the fluid circuit. The fluid circuit may generally be configured to contain the coolant fluid medium.

According to a fourth aspect of the disclosure, there is provided a computer program comprising program code means for performing the steps of the first aspect when the program is run on a computer.

According to a fifth aspect of the disclosure, there is provided a computer readable medium carrying a computer program comprising program code means for performing the steps of the first aspect when the program product is run on a computer.

Effects and features of the fourth and fifth aspects are largely analogous to those described above in relation to the first aspect.

Further advantages and advantageous features of the disclosure are disclosed in the following description and in the dependent claims. It should also be readily appreciated that different features may be combined to create embodiments other than those described in the following, without departing from the scope of the present disclosure.

The terminology used herein is for the purpose of describing particular examples only and is not intended to be limiting of the disclosure. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

### BRIEF DESCRIPTION OF THE DRAWINGS

The above, as well as additional objects, features and advantages of the present disclosure, will be better understood through the following illustrative and non-limiting detailed description of exemplary embodiments of the present disclosure, wherein:
Fig. 1 is a vehicle in the form a truck according to example embodiments of the disclosure;
Fig. 2 schematically illustrates a system for the vehicle according to example embodiments of the disclosure;
Fig. 3 is a flow-chart of method steps according to an example embodiment of the disclosure;
Fig. 4 is a flow-chart of method steps according to an example embodiment of the disclosure; and
Fig. 5 is a flow-chart of method steps according to an example embodiment of the disclosure.

With reference to the appended drawings, below follows a more detailed description of embodiments of the disclosure cited as examples.

### DETAILED DESCRIPTION OF EXAMPLE EMBODIMENTS OF THE DISCLOSURE

The present disclosure will be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. The skilled person will recognize that many changes and modifications may be made within the scope of the appended claims. Similar reference characters refer to similar elements throughout the description.

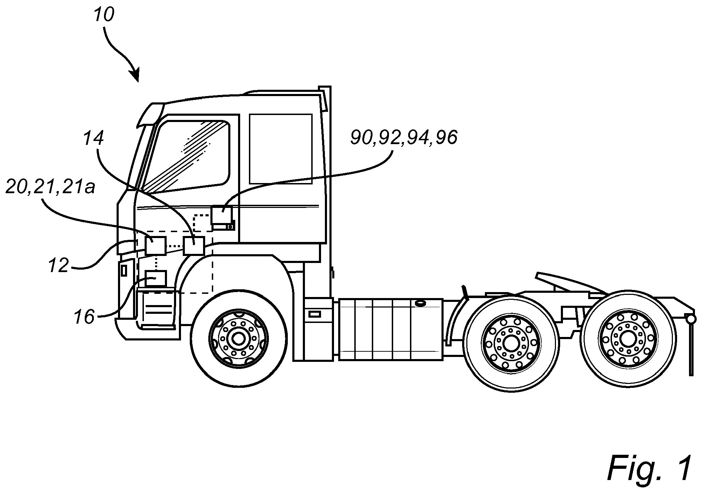

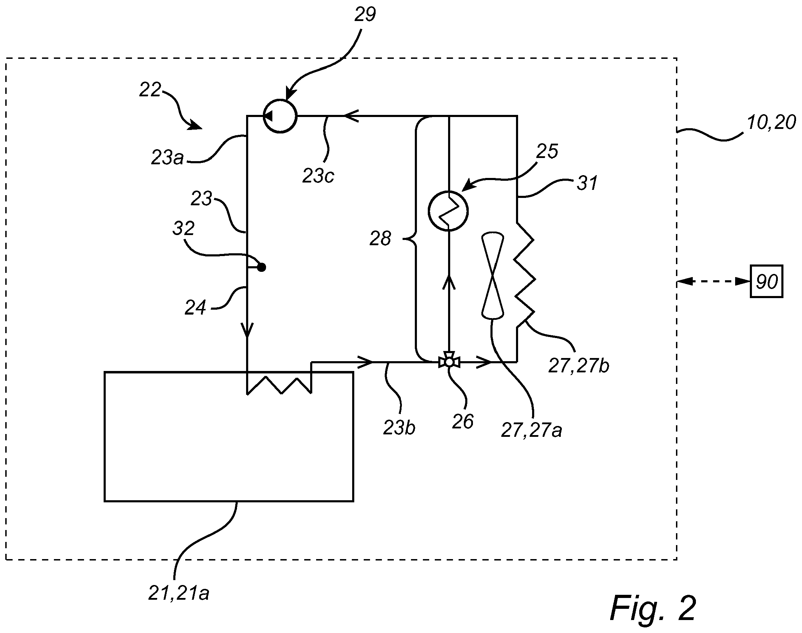

Referring now to the drawings and to Fig. 1 in particular, there is depicted an exemplary vehicle, here illustrated as an electrical truck 10. In this example, the electric truck is a fully electrical vehicle. The electrical truck 10 comprises an electric propulsion system 12 configured to provide traction power to the vehicle. By way of example, the electric propulsion system 12 comprises one or more fuel cell stacks 21 forming a fuel cell system, FCS, 20. As such, the vehicle 10 is a fuel cell electric vehicle, FCEV, comprising the FCS 20. Although not illustrated, the vehicle 10 may comprise multiple fuel cell systems 20. The FCS 20 comprises at least one fuel cell stack 21 and will be described in more detail in relation to Fig. 2.

In addition, the vehicle 10 comprises a control unit 90. The control unit 90 generally comprises a processing circuitry 92 and a storage memory 94. The control unit 90 can be a part of an electronic control unit (ECU) for controlling the vehicle 10 and various parts of the vehicle, such as the FCS 20, the fuel cell stacks(s) 21 and any other parts of the FCS.

In the FCEV 10, as illustrated e.g. in Fig. 1, one or more fuel cell stacks 21 may be arranged to generate electricity to propel the vehicle 10 and to power auxiliary equipment. Each one of the fuel cell stacks 21 generally comprises a plurality of fuel cells 21a. Each one of the fuel cell stacks 21 generally comprises a high number of fuel cells, e.g. 100-300 fuel cells connected in series. The FCS 20 may thus comprise a number of fuel cell stacks having a number of fuel cells, respectively. In other examples, the FCS 20 comprises a single fuel cell stack 21 with a number of fuel cells. While there are several different types of fuel cells, distinguished mainly by the type of electrolyte used, a so-called Proton Exchange Membrane (PEM) fuel cell is particularly suitable for use in heavy-duty vehicles, such as the vehicle 10 in Fig. 1. PEM fuel cells have high power density, a solid electrolyte and also a long operational lifetime. PEM fuel cells generally operate in a temperature range of 50 to 100 degrees C. The PEM fuel cell is configured to create electricity from two reactants, hydrogen and oxygen, such as compressed air. In addition, such PEM fuel cells need an efficient and reliable cooling, as will be further described herein in relation to Figs. 2 to 5.

As also schematically illustrated in Fig. 1, the FCEV 10 here comprises a battery system 14 and an electric machine 16. The FCS 20, including the fuel cell stack(s) 21, together with the battery system 14 and the electric machine 16 form parts of the electric propulsion system 12 for providing traction power to the vehicle 10. The electric machine 16 is a traction motor for providing traction power to the vehicle 10, i.e. for propelling the wheels of the vehicle. The fuel cell stack(s) 21 of the FCS 20 may be connected to the electric machine 16 to provide power to the electrical machine 16, whereby the electrical machine 16 can provide traction power to one or more wheels, or any other types of ground engaging members. The electric machine may generally include a conventional electric motor suitable for a heavy-duty vehicle.

The electrical powertrain system 12 may further comprise additional components as are readily known in the field of electrical propulsions systems, such as a transmission (not shown) for transmitting a rotational movement from the electric motor(s) to a propulsion shaft, sometimes denoted as the drive shaft (not shown). The propulsion shaft connects the transmission to the wheels. Furthermore, although not shown, the electric motor is typically coupled to the transmission by a clutch. The traction motor (electric machine) is arranged to receive electric power from any one of the battery system 14 and the fuel cell stack(s) 21.

The FCS 20 may also comprise additional components such as a balance of plant system for the fuel cell stack(s) and the FCS. The balance of plant refers to and encompasses typically all components of the FCS except the fuel cell stack itself.

Such components may relate to the flow systems to each one of the fuel cell stacks 21 making up the FCS. These components may include the hydrogen supply system to an anode side of the fuel cell stack 21, an air supply system to a cathode side of the fuel cell stack, as well as the electrical power connection from the fuel cell stack 21 to the battery system 14 and the electrical machine 16. These flow systems and other parts of the FCS and fuel cell stack can generally be provided in several different manners, and thus not further described herein.

Another type of flow system for the fuel cell stack 21 is the coolant system. The coolant system may generally correspond to a thermal management system or be an integral part of such thermal management system. The purpose of the thermal management system is to handle the heat generated as a by-product of the electrochemical reactions in the fuel cells. The sensitivity of the solid polymer membrane to temperature may typically require that the thermal management of e.g. a PEM fuel cell stack operates efficiently to meet the high demands during operation of the vehicle.

Fig. 2 depicts one example of a thermal management system 22. The thermal management system is arranged and configured to transfer heat away from the fuel cells 21 to maintain a desired temperature inside the fuel cells. The thermal management system 22 may also be configured to heat the fuel cells 21a of the fuel cell stack(s) during cold conditions, as will be further described herein.

The thermal management system 22 is in fluid communication with the fuel cells 21a of the fuel cell stack 21. By way of example, the thermal management system 22 is generally in fluid communication with one or more coolant channels (not illustrated) extending through the fuel cell stack 21, or extending at least through active parts of the fuel cell stack 21. In this manner, the thermal management system 22 is arranged and configured for cooling of the active fuel cell components, such as the bipolar plates and the PEMs, as is commonly known in the art. The thermal management system 22 should be configured to maintain the operating temperature of the fuel cell stack 21 at its optimal temperature, usually in the temperature range from 60 to 80°C.

One example embodiment of an FCS 20 comprising the thermal management system 22 for the fuel cell stack 21 of the vehicle 10 of Fig. 1 will now be further described in relation to Fig. 2.

The FCS 20 here comprises the fuel cell stack 21 containing a plurality of PEM fuel cells 21a arranged in a stacked series-configuration (not explicitly illustrated). Further, the FCS 20 comprises the thermal management system 22, as illustrated in Fig. 2. The thermal management system 22 comprises a fluid circuit 23 for circulating a coolant 24.

The fluid circuit 23 is a closed-loop circuit for recirculating the coolant 24. By way of example, the fluid circuit 23 is arranged in association with the fuel cell stack 21 so as to allow transfer of heat from the fuel cell stack 21 to the coolant 24 flowing through the fluid circuit 23. In addition, the fluid circuit 23 is arranged in association with the fuel cell stack 21 to allow for heating of the fuel cell stack 21 by circulating the coolant 24 through the fluid circuit 23 during cold conditions and/or during a cold start of the vehicle and the FCS 20. Thus, the thermal management system 22 includes at least one part arranged to provide heat to the fuel cell stack 21. In addition, the thermal management system 22 may also include one part arranged to handle heat generated from the active fuel cell stack 21.

In this example, the fluid circuit 23 contains coolant 24 in the form of a liquid, such as deionized water or an antifreeze coolant for operation during sub-zero conditions. Such type of coolant is commonly known in the field of fuel cell coolant system. However, the coolant 24 may generally refer to any type of liquid that can transport heat and optionally also provide an adequate corrosion inhibition.

In Fig. 2, the fluid circuit 23 comprises a coolant inlet flow path 23a to the fuel cells 21a and a coolant outlet flow path 23b to the fuel cells 21a. The coolant inlet flow path 23a is in fluid communication with the fuel cell stack 21. In a similar vein, the coolant outlet flow path 23b is in fluid communication with the fuel cell stack 21.

Moreover, the thermal management system 22 comprises a pump 29, as illustrated in Fig. 2. The pump 29 is a coolant pump 29. Hence, the coolant pump 29 is configured to recirculate the coolant 24 in the fluid circuit 23. The coolant pump 29 is arranged to generate a flow of coolant in the fluid circuit 23. By way of example, the coolant pump 29 is an electric centrifugal pump or the like, as is commonly used in vehicle thermal management and cooling systems. The coolant pump 29 may be part of a coolant flow control system and thus in communication with the control unit 90. In Fig. 2, the coolant pump 29 is disposed in the fluid circuit 23 upstream the fuel cells 21a. By way of example, the coolant pump 29 is disposed in the coolant inlet flow path 23a of the fluid circuit 23. The coolant pump may likewise be disposed downstream the fuel cells 21a. By way of example, the coolant pump may be disposed in the coolant outlet flow path 23b.

In Fig. 2, the coolant pump 29 is arranged and configured to direct coolant 24 to the fuel cells 21a via the coolant inlet flow path 23a. The coolant 24 is then transferred from the fuel cells 21a via the coolant outlet flow path 23b. In other words, the coolant 24 flows in the fluid circuit 23 in a direction as indicated by the arrows in Fig. 2.

In order to heat the coolant 24 of the thermal management system 22, the thermal management system 22 comprises a heater 25 arranged to regulate a temperature of the coolant 24. The heater 25 is generally operated to increase the temperature of the coolant 24. By way of example, the heater 25 is an electrically operated heater. The heater may likewise be a hydrogen combustion/catalytic heater. The heater may be arranged in the fluid circuit 23 at several different locations, and may thus not be restricted to the position illustrated in Fig. 2.

Further, as illustrated in Fig. 2, the thermal management system 22 comprises a cooler arrangement 27. The cooler arrangement 27 is disposed in the fluid circuit 23 for further regulating the temperature of the coolant 24. The cooler arrangement 27 is generally operated to decrease the temperature of the coolant 24. By way of example, the cooler arrangement 27 comprises a heat exchanger disposed in a path 31 for cooling portions of the coolant 24 that have been heated by the fuel cells of the fuel cell stack 21.

In Fig. 2, the heater 25 is arranged in a cooler arrangement by-pass path 28. The cooler arrangement bypass-path 28 is an integral part of the fluid circuit 23. Accordingly, the cooler arrangement 27 and the heater 25 are arranged in a parallel configuration. Other arrangement of the cooler arrangement and the heater may also be conceivable.

As illustrated in Fig. 2, the fluid circuit 23 comprises the coolant inlet flow path 23a, the coolant outlet flow path 23b and a parallel fluid flow path configuration. The coolant inlet flow path 23a is in fluid communication with the parallel path configuration in the form of the fluid flow path 28 for the heater 25 and the complementary fluid flow path 31 for the cooler arrangement 27. As such, the heater 25 is disposed in the cooler arrangement by-pass fluid flow path 28 of the fluid circuit 23 and the cooler arrangement 27 is arranged in the parallel fluid flow path 31 of the fluid circuit 23.

In Fig. 2, the cooler arrangement 27 comprises a fan 27a and a cooler 27b. The cooler 27b is by way of example a conventional heat exchanger. The heat exchanger may be the radiator of the vehicle, which generally is a liquid-to-air heat exchanger. Hence, in this type of arrangement, the coolant is transferred directly to the radiator corresponding to the heat exchanger. Heat exchangers and radiators are commonly known components in the field of fuel cell systems, and thus not further described herein. In other examples, the heat exchanger may be a liquid-to-liquid heat exchanger disposed in the fluid circuit 23. The heat exchanger may e.g. be a liquid-liquid plate heat exchanger, but it may also be conceivable to use a liquid-gas heat exchanger. The heat exchanger may generally be further arranged to dissipate the transferred heat to the ambient air via one or more additional thermal management components such as a radiator. In other words, the heat exchanger may likewise be arranged as an intermediate cooling device between the fuel cell stack and the radiator. Thus, the fuel cell stack 21 may in some examples be coupled to the heat exchanger (liquid/liquid), which in turn is coupled to the radiator (liquid/air).

As further illustrated in Fig. 2, the cooler arrangement by-pass fluid flow path 28 and the parallel fluid flow path 31 intersect into a common fluid flow path 23c to the coolant pump 29. Thus, the flow of coolant from path 31 and path 28 are mixed, or intersect, upstream of the pump 29. The common fluid flow path 23c is in fluid communication with the coolant inlet flow path 23a.

Optionally, the flow of coolant from the fuel cells 21a to the heater 25 and the cooler arrangement 27 is controlled by a valve in the form of a controllable valve assembly 26. The controllable valve assembly 26 is arranged upstream the heater 25 and the cooler arrangement 27. By way of example, the controllable valve assembly 26 is disposed in the coolant outlet flow path 23b.

By way of example, the controllable valve assembly 26 is a conventional three-way flow control valve, as is ordinarily know in the art. The controllable valve assembly 26 is generally also arranged in communication with the control unit 90. By way of example, the control unit 90 can open and close the controllable valve assembly 26 so as to permit or restrict a flow of coolant from any one of the heater 25 and the cooler arrangement 27 to the fuel cell stack(s) 21.

In Fig. 2, the coolant pump 29 is disposed upstream the heater 25 and the cooler arrangement 27. The coolant pump 29 may likewise be disposed downstream the heater 25 and the cooler arrangement 27.

As illustrated by the arrows in Fig. 2, the coolant 24 circulates in the fluid circuit 23 from the coolant pump 29 to the fuel cell stack 21, and then from the fuel cell stack 21 to the controllable valve assembly 26, where the flow of coolant is controlled such that coolant flows partially to the fluid flow path 28 for the heater 25 and partially to the complementary fluid flow path 31 for the cooler arrangement 27. The coolant from the fluid flow path 28 and the complementary fluid flow path 31 then return to the coolant pump 29.

It should be readily appreciated that the actual flow in the fluid circuit 23 may generally be controlled in cooperation with the coolant pump 29, the controllable valve assembly 26 and the control unit 90. Thus, the thermal management system 22 comprises the control unit 90 for regulating a coolant temperature and a coolant mass flow to the fuel cell stack(s)21. By way of example, the control unit 90 is arranged in communication with the coolant pump 29 and the controllable valve assembly 26 for regulating the coolant mass flow and the coolant temperature to one or more coolant-channels of the fuel cell stack 21.

In Fig. 2, the thermal management system 22 also comprises an optional temperature sensor 32. The temperature sensor 32 is disposed in the fluid circuit 23 and configured to measure a temperature of the coolant 24. By way example, the temperature sensor 32 is disposed in the coolant inlet flow path 23a of the fluid circuit 23 and configured to measure a temperature of the coolant 24 entering the fuel cell stack 21. In this manner, it becomes possible to monitor and determine the temperature of the coolant 24 in the fluid circuit 23 downstream the heater 25 and the cooler arrangement 27. The purpose of the temperature sensor 32 is thus to monitor the temperature of the coolant 24 entering in the fuel cell stack 21, whereby the determined temperature can be used as a control signal for collectively controlling the controllable valve assembly 26, the heater 25, the fan and the pump 29 so as to provide sufficient cooling/heating to the fuel cell stack.

The temperature sensor 32 is generally also arranged in communication with the control unit 90 for transferring temperature data of the coolant to the control unit 90. The temperature of the coolant 24 may be monitored and determined in other ways and at other locations. Another suitable location of the temperature sensor is at the coolant outlet flow path 23b. The thermal management system 20 may also comprise a plurality of temperature sensors 32.

As will be further appreciated from the following description of the thermal management system 22, the arrangement of the heater 25 in the fluid circuit 23 provides for an improved temperature control of the fuel cell stack(s) 21, thus allowing for a more precise regulation of the temperature of the fuel cells making up the FCS 20.

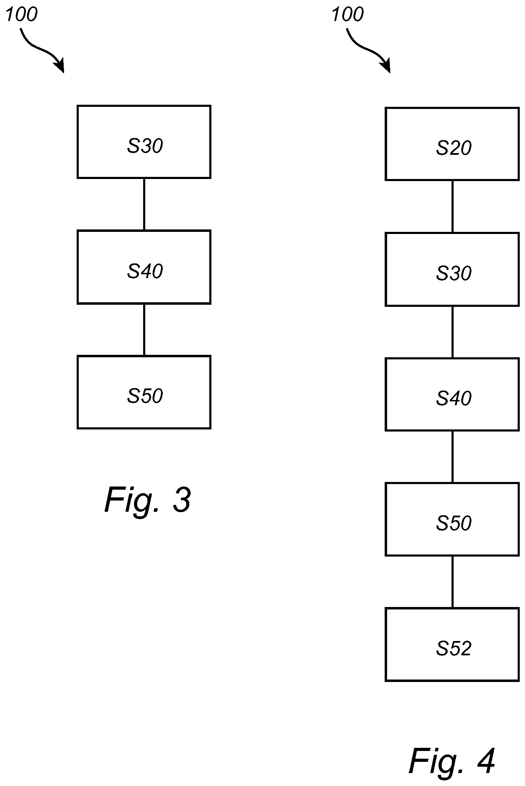

Hence, turning now to the control of the heater 25 so as to increase the temperature of the fuel cell(s) of the fuel cell stack 21. As mentioned above, the FCS 20 comprises the control unit 90. The control unit 90 is configured to control a temperature of the FCS 20 of the vehicle 10. The control unit 90 is here also configured to control the FCS 20 and the thermal management system 22. In this example, the control unit 90 is an electronic control unit. By way of example, the electronic control unit is configured to control the FCS 20 according to any one of the example embodiments of a method, as described in any one of the Figs. 3 to 5.

Accordingly, the control unit 90 is configured to predict an FCS power demand for a given time horizon, configured to predict a power capability of the FCS 20 for the given time horizon, and further configured to operate the heater 25 so as to control the temperature of the FCS 20 during the time horizon, on the basis of the predicted power capability of the FCS 20 and the predicted FCS power demand.

The control unit 90 is here configured to initiate the prediction of the power capability of the FCS 20 and the subsequent control of the heater 25 if a current temperature of the coolant 24 is below a coolant temperature setpoint.

In other words, the control of the heater 25 and power capability estimation/prediction over a future time horizon will be initiated if the coolant temperature is below the coolant temperature set point. This is at least partly based on the observation that if the coolant temperature is below the coolant temperature set point, the power capability of the FCS will be low.

The current temperature of the coolant 24 is measured by the temperature sensor 32. A value of the current temperature of the coolant 24 is transferred to the control unit 90. The control unit 90 is configured to receive the value of the current temperature of the coolant 24. As such, the control unit 90 is configured to determine the current temperature of the coolant 24.

In addition, the control unit 90 is configured to compare the determined current coolant temperature with the coolant temperature setpoint. The coolant temperature setpoint is here a predetermined value indicative of a critical temperature threshold value for the heater. By way of example, the coolant temperature setpoint amounts to a nominal setpoint, e.g. a predetermined normal operating coolant temperature. The coolant temperature setpoint may in other examples be set to a maximum allowable coolant temperature. However, the coolant temperature setpoint may generally be set to a temperature level slightly below the maximum allowable coolant temperature. The coolant temperature setpoint can be stored in the control unit, transferred to and received at the control unit and/or be a dynamic temperature setpoint that is updated by the control unit 90 based on the use of the FCS 20 and the vehicle 10.

Optionally, the control unit 90 is also configured to compare the determined current coolant temperature with the coolant temperature setpoint as well as with the maximum allowable coolant temperature. As such, the control unit 90 is configured to ensure that the heater 25 is not allowed to further heat the coolant 24 above its maximum temperature level for heating the fuel cell(s) of the fuel cell stack 21. The use of the maximum allowable coolant temperature in the control of the FCS 20 allows for reducing the risk of overheating the fuel cell(s) of the fuel cell stack 21 and may thus provide for an emergency shut down for the heater 25.

In a situation when the control unit 90 determines that the determined current coolant temperature is below the coolant temperature setpoint, based on the comparison above, the control unit 90 continues to predict the temperature evolution of the coolant 24 for the time horizon and based on that prediction, further predict the power capability for the future time horizon.

Typically, the control unit 90 is configured to initiate the operation of predicting the FCS power capability for the time horizon only if the temperature of the coolant 24 is considerably below the coolant temperature setpoint. Such difference between the current coolant temperature and the coolant temperature setpoint may be about 5 to 60 degrees C.

The power capability of the FCS 20 for the given time horizon can be estimated in several different manners by the control unit 90. By way of example, the control unit 90 is configured to estimate an expected evolvement of the temperature of the FCS 20 if the FCS 20 is operated according to the predicted FCS power demand during the given time horizon. As such, the control unit 90 performs an estimation of an expected evolvement of the temperature of the FCS during the time horizon based on the assumption that the FCS 20 is also operated according to the predicted FCS power demand during the time horizon. Such control operation of the control unit 90 is based on the insight that the available power limit or power output from the FCS 20 is at least partly a function of the temperature of the FCS 20. The available power limit or power output from the FCS 20 may generally also depend on the age/health of the FCS 20. Hence, for some implementations of the FCS 20 and the methods mentioned herein, it may also be favourable, although not required, to determine the state of health of the FCS 20. Thus, for a given ambient condition and a given state of health of the FCS 20, the power capability can be estimated as a function of the temperature of the FCS 20.

Accordingly, the power capability of the FCS 20 is predicted by predicting the FCS power demand and subsequently estimating the evolution of the power capability of the FCS 20 by evaluating the level of heat that will be generated if the FCS 20 is operated according to the predicted power demand for the given time horizon. By evaluating the level of heat that will be generated if the FCS 20 is operated according to the predicted power demand for the given time horizon, it becomes possible to estimate the temperature evolution of the coolant 24, and thus the temperature evolution of the fuel cell(s) of the fuel cell stack 21. As such, the control unit 90 is configured to determine the power capability evolution on the basis of the temperature evolution of the coolant 24.

Optionally, the control unit 90 is configured to compare the predicted FCS power demand with the determined FCS power capability. Further, the control unit 90 is here configured to operate the heater 25 in response to the comparison. Hence, by way of example, if the control unit 90 determines that the predicted FCS power demand is above the predicted FCS power capability at any point of time during the time horizon, the control unit 90 controls the operation of the heater 25 in response to the comparison so as to control the temperature of the FCS 20 during the time horizon. As such, the control unit 90 is configured to control the heater 25 so as to adjust the temperature of the coolant 25, and thus the temperature of the fuel cell(s) of the fuel cell stack, on the basis of the predicted FCS power demand and the determined FCS power capability. In this manner, it becomes possible to control the temperature of the coolant 24 by the heater 25, and thus the temperature of the fuel cell(s) of the fuel cell stack 21, such that the power capability of the FCS 20 at a given instant, or point in time, during the time horizon at least amounts to the predicted power demand, thereby allowing the FCS 20 to fulfil the power request.

Accordingly, the control unit 90 is configured to estimate the power request and use the estimated power request to determine the temperature evolution of the coolant 24 so as to evaluate how the power capability of the FCS will evolve. As such, if the control unit determines that the power request in the prediction time horizon is greater than the power capability of the FCS, the control unit 90 is configured to turn on the heater 25 to shift the power capability slightly higher.

The above control of the heater 25 by means of the control unit 90 may further be described by an example of an FCS with a maximum power of about 150kW at nominal temperature of about 70 degrees C. In an operating situation during cold conditions, e.g. after a cold start of the FCS 20, the control unit 90 predicts that in a time horizon of about two minutes, the FCS power request will be approximately 70 kW, while the temperature of the FCS 20 (i.e. the temperature of the fuel cell(s) making up the FCS) may only amount to about 30 degrees C, at which the power capability is only 50 kW. However, by operating the heater 25 on the basis of the predicted power capability of the FCS and the predicted FCS power demand, the heater 25 is controlled such that the temperature of the fuel cell(s) of the FCS 20 is e.g. about 40 degrees C at the two minute instant. Such temperature increase of the fuel cell(s) of the FCS 20 allows for heating the FCS 20 such that the FCS power capability is up to 70kW at exactly that instant when a power demand of about 70kW is required from the FCS 20.

As mentioned above, the control unit 90 is here configured to control the thermal management system 22 during a start-up of the FCS 20. Hence, the control unit 90 may also be configured to receive a control signal indicative of an FCS start-up.

Favourably, the control unit 90 is configured to control the heater 25 into a deactivated state if the determined current coolant temperature is above the coolant temperature setpoint. The deactivated state means that the heater 25 is shut down, e.g. by the control unit 90.

It may also be conceivable that the control unit 90 is configured to allow control of the coolant pressure and mass flow rate in the fluid circuit 23 and to allow control of a flow of coolant into one or more coolant channels of the fuel cell stack 21. Such control of the flow of the coolant is generally provided in cooperation with the coolant pump 29. It should be noted that the precise control of the coolant flow may generally also depend on the particular application and the particular operating conditions of the vehicle and the FCS.

Favourably, the control unit 90 is also configured to receive route information. Route information can for example be acquired from a navigation system (not illustrated) of the vehicle. Route information may also be acquired from a remote server or a cloud environment using a wireless connection of the vehicle. Furthermore, certain route information may be provided by the driver of the vehicle. In addition to data relating to the destination, which is typically determined by the driver, the driver may also provide information describing planned stops along the route. The planned stop may for example be a planned lunch break or other stops.

The route information comprises data generally describing at least a route segment from a starting point to an end point. The route information is used as a basis for predicting the FCS power demand for the given time horizon. The route information here comprises any one of an indication of a speed limit, road type, road elevation profile, construction work and traffic flow.

Typically, the route information comprises data indicating the starting point and the end point of the route, thereby giving the travel distance. Moreover, in this example, the route information comprises the road elevation profile of the route, in particular the route elevation profile of the route segment.

Subsequently, on the basis of the received data indicating the road elevation profile, the control unit 90 is configured to predict the FCS power demand for the route segment during the given time horizon, e.g. in comparison to a generally flat route segment without any change in altitude during the given time horizon.

The control unit 90 may also receive detailed traffic information from the remote server, as mentioned above. In one embodiment, the control unit receives data directly from a GPS receiver and/or the navigation system so as to correlate a current location of the vehicle 10 with the information received from the remote server, for determining when e.g. an uphill slope is to be expected.

One vehicle parameter that may typically have an impact on the power need and/or power demand is the vehicle weight. By way of example, the vehicle has to overcome grade resistance when it moves up on a gradient, because the weight of the vehicle is to be lifted through a vertical distance. Hence, in addition, or alternatively, the control unit is configured to receive data of the vehicle weight, such as the gross combination weight of the vehicle, and further determine the power demand from the FCS for the given time horizon based on the vehicle weight. Such data, e.g. gross combination weight, can be derivable from the vehicle specification and/or from a look-up table stored in the memory. The gross combination weight can also be determined by sensors arranged on the vehicle, e.g. by using sensors arranged and configured to determine loads on the front and rear axles. The vehicle weight may generally refer to, or include, the gross combination weight and any other needed weight data for an accurate calculation of the vehicle weight. The gross combination weight of the vehicle may generally refer to the total weight of the tractor unit plus trailer plus load.

It should of course also be noted that the motion of a vehicle moving on a road is resisted by other forces, such as aerodynamic forces, known as wind or air resistance, and road resistance which is generally termed as rolling resistance. Hence, the power required to propel the vehicle may generally be proportional to the total resistance to its motion and the speed. The vehicle motion equation is commonly known and thus not further described herein.

By way of example, the control unit 90 is configured to predict the FCS power demand for the given time horizon at least partly based on a previous FCS power demand profile for the route segment. Such previous FCS power demand profile is generally stored in the memory of the control unit 90 and/or received at the control unit 90 from another remote server.

The previous FCS power demand profile for the route segment is by way of example based on any one of previous vehicle operating cycle statistics and driver characteristics. Such previous vehicle operating cycle statistics and driver characteristics are generally stored in the memory of the control unit 90 and/or received at the control unit 90 from another remote server. In this context, the previous FCS power demand profile for the route segment is based on previous vehicle operating cycle statistics for the same vehicle or for a different previous vehicle.

In addition, or alternatively, the FCS power demand for the given time horizon is at least partly based on data relating to environmental conditions. By way of example, the control unit 90 is configured to receive data relating to environmental conditions. The data may refer to a weather forecast and may for example be received from the remote server, for example using a network connection, such as the Internet. The data may alternatively be received using a radio connection.

Another type of data for predicting FCS power demand is the temperature of the battery system at the time of start-up of the FCS. If the batteries are cold, the FCS power demand may be higher. Moreover, if the vehicle 10 comprises a conditioning system for the batteries (heating/cooling), the control and operation of such system may also have an impact on the FCS power demand. Hence, the control unit 90 may also include data relating to any operation of any other system when predicting the FCS power demand.

Favourably, the use of historical data may be combined with data indicating conditions particularly related to the ambient conditions, such as temperature and wind speed, as well as data indicating battery conditions (SoC, State of health and so on) and other vehicle parameters such as weight and payload. The weight and payload may generally be included in the overall data indicative of the gross combination weight The FCS power demand may generally be calculated when the driver starts the trip/mission, but other options are also possible.

The control unit 90 may also comprise an acquiring data unit 96 (see Fig. 1). The acquiring data unit is configured to gather data relating to the temperature of the coolant 24 and the FCS 20. The acquiring data unit is also configured to transmit the gathered data to the control unit 90 for further processing. The communication between the acquiring data unit and the control unit 90 can be made by a wire connection, wirelessly or by any other technology such as Bluetooth or the like. Analogously, the communication between the acquiring data unit, the control unit 90 and any temperature sensor at or adjacent the fluid circuit 23 may be made by a wire connection, wirelessly or by any other technology such as Bluetooth or the like.

The prediction of the power capability of the FCS 20 and the FCS power demand for the time horizon may also be determined by a combination of available data to control the heater 25 with the best possible accuracy given the available information. The amount of information and the accuracy of the gathered data may also dictate the maximum extent of the prediction window, i.e. the time horizon. By way of example, the time horizon is set to about 300 to 600 seconds by the control unit 90. The time horizon refers to a future time horizon.

In order to describe the control of the FCS 20 in further detail, reference is now made to Figs. 3 - 5 which illustrates various example embodiments thereof. The FCS 20 is operable by a method according to any one of the example embodiments as described in any one of the Figs. 3 to 5.

Turning now to Fig. 3, there is depicted a flowchart of a method according to an example embodiment of the disclosure. The method 100 is intended for controlling a temperature of the FCS 20 of the vehicle 10, as described in relation to Figs. 1 and 2. The sequences of the method are typically performed by the control unit 90, as described herein.

As illustrated in Fig. 3, the method comprises a step of predicting S30 an FCS power demand for a given time horizon.

In addition, the method comprises a step of predicting S40 a power capability of the FCS for the given time horizon.

Moreover, the method comprises a step of operating S50 the heater so as to control the temperature of the FCS during said time horizon, on the basis of the predicted power capability of the FCS and the predicted FCS power demand.

In an extended version of the method illustrated in Fig. 3, the method comprises a number of additional steps to operate the heater so as to control the temperature of the coolant and/or the FCS 20 during the time horizon. Fig. 4 illustrates some of the optional steps of the method 100 according to additional example embodiments. In other words, the embodiment of the method illustrated in Fig. 4 generally includes the steps of the method as described above in relation to Fig. 3.

In addition, the method comprises a step of initiating the prediction of the FCS power capability for the time horizon if a current temperature of the coolant is below the coolant temperature setpoint. In such configuration of the method, the method also comprises a step of determining S20 the current temperature of the coolant and comparing the determined current coolant temperature with the coolant temperature setpoint.

Moreover, in Fig. 4, the method comprises a step of controlling S52 the heater 25 into the deactivated state if the determined current coolant temperature is above the coolant temperature setpoint.

As mentioned above in relation to the control unit 90, the control unit 90 can be configured in several different manners to predict the power capability of the FCS 20 and the FCS power demand.

Hence, by way of example, the step of predicting S40 a power capability of the FCS 20 for the given time horizon additionally comprises estimating an expected evolvement of the temperature of the FCS 20 if the FCS 20 is operated according to the predicted FCS power demand during the given time horizon.

In addition, or alternatively, the step of predicting S40 the power capability of the FCS 20 for the given time horizon may comprise determining state-of-health, SOH, of the FCS. The SOH of a fuel cell system refers to the quantification of the performance potential compared with a nominal reference. The SOH can be quantified by the loss of power that the system can provide for a specific current value. The SOH can be determined in a conventional manner, e.g. by means of statistical data about how the FCS has been operated in the past. The SOH can also be determined using electrochemical impedance spectroscopy, as is commonly known in the art. In other examples, the SOH is determined by measuring the voltages and current from the FCS during operation of the FCS and comparing it with data indicative of a so-called beginning of life polarization curve. These are commonly known ways of determining SOH, and thus not further described herein.

Determining SOH for predicting the power capability of the FCS 20 may provide for an even more correct prediction of the power capability of the FCS 20 because it has been observed that maximum power capability from the FCS 20 may generally also depend on the SOH. As SOH of the FCS 20 generally decreases the maximum power that the FCS 20 can provide, the SOH decreases as well as a consequence. Thus, the method may use SOH data for determining the coolant temperature setpoint.

Also, if the SOH is decreasing, the power required for operating the heater will also change. That is, an FCS having a reduced SOH will be less efficient and produce more heat. This may lead to a faster heat up of the FCS.

Hence, the method here comprises predicting S40 the power capability of the FCS for the given time horizon, wherein predicting the power capability of the FCS for the given time horizon comprises determining the SOH of the FCS 20 and, based on the determined SOH of the FCS 20, further estimating an expected evolvement of the temperature of the FCS 20 if the FCS is operated according to the predicted FCS power demand during the given time horizon, and on the basis of the predicted power capability of the FCS 20 and the predicted FCS power demand, operating the heater 25 so as to control the temperature of said FCS during said time horizon.

In one example, the predicting the power capability of the FCS for the given time horizon comprises adjusting the power capability based on the determined SOH of the FCS 20. By way of example, the power capability of the FCS 20 is reduced to a lower maximum power capability value based on the determined SOH of the FCS 20. In one example, the power capability of the FCS 20 is reduced with a pre-determined value to a lower maximum power capability value based on the determined SOH of the FCS 20. The pre-determined value can be derivable from a look-up table or the like for the FCS operational characteristics. As such, predicting a power capability of the FCS for the given time horizon may comprise reducing the power capability of the FCS based on the determined SOH to a reduced maximum power capability.

In one example, the provision of determining the SOH of the FCS 20 may comprise determining the SOH of the FCS 20 and comparing the determined SOH with a threshold value. The threshold value can be derivable from a look-up table or the like for the FCS operational characteristics. If the determined SOH of the FCS is below the threshold value, the method may comprise reducing the predicted maximum power capability of the FCS for the given time horizon with a predetermined value. The threshold value can be derivable from a look-up table or the like for the FCS operational characteristics. This provision may generally be performed prior to estimating the expected evolvement of the temperature of the FCS 20 if the FCS is operated according to the predicted FCS power demand during the given time horizon.

In Figs. 3 and 4, the method 100 optionally further comprises comparing the predicted FCS power demand with the FCS power capability; and if the predicted FCS power demand is above the predicted FCS power capability at any point of time in the time horizon, the method further comprises operating the heater 25 in response to the comparison so as to control the temperature of the FCS 20 during the time horizon.

In Figs. 3 and 4, the method 100 is performed at a start-up of the FCS. The method 100 may thus further comprise receiving a control signal indicative of an FCS start-up.

The step of predicting S30 the FCS power demand for a given time horizon is at least partly based on route information describing at least a route segment from a starting point to an end point.

In addition, or alternatively, the step of predicting S30 the FCS power demand for a given time horizon is at least partly based on a previous FCS power demand profile for the route segment.

As mentioned above, the previous FCS power demand profile for the route segment is generally based on any one of previous vehicle operating cycle statistics and driver characteristics.

In addition, or alternatively, the step of predicting S30 the FCS power demand for a given time horizon is at least partly based on the gross combination weight of the vehicle. The gross combination weight can either be stored in the control unit 90 or transferred to the control unit 90 from the remote server. The gross combination weight may also be determined by means of weight sensors arranged on the vehicle. Thus, the method may generally also comprise a step of determining the gross combination weight from the weight of tractor unit of the vehicle and any weight of any trailer plus load.

In addition, or alternatively, the method further comprises a step of receiving data relating to environmental conditions. Hereby, the step of predicting the FCS power demand for a given time horizon is at least partly based on data relating to environmental conditions.

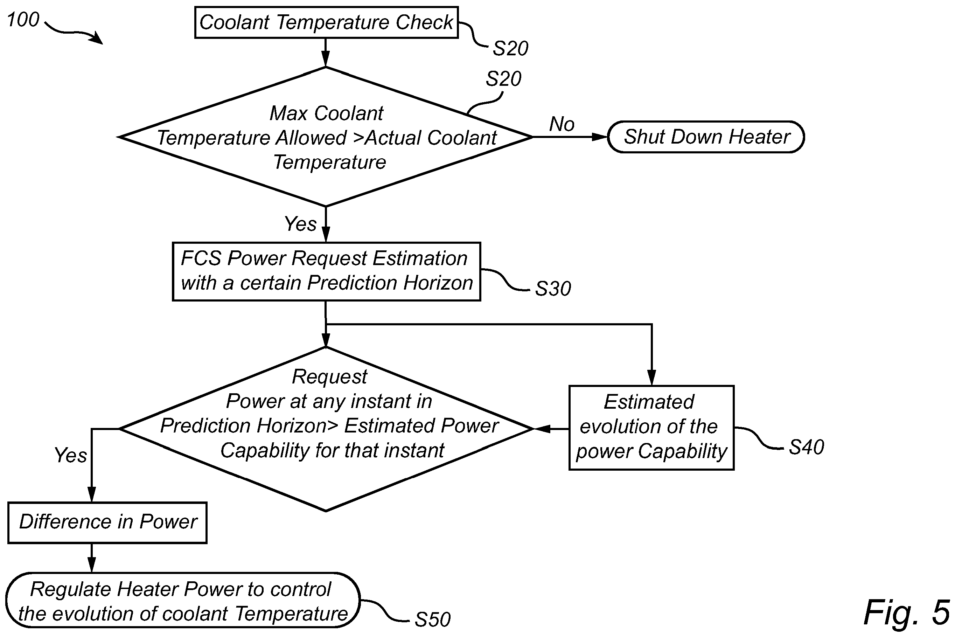

Fig. 5 is an example of a flow-chart further summarizing the method 100, as described in relation to Fig. 4 in combination with Fig. 3. Hence, in Fig. 5, there is illustrated a method 100 comprising determining S20 the current temperature of the coolant and comparing S20 the determined current coolant temperature with the coolant temperature setpoint. In Fig. 5, the coolant temperature setpoint is set to the maximum allowable coolant temperature. Then, if the determined current coolant temperature is above the maximum allowable coolant temperature, the control method may generally decide to shut down the heater 25. That is, the method controls the heater 25 into the deactivated state if the determined current coolant temperature is above the coolant temperature setpoint. However, if the determined current coolant temperature is below the maximum allowable coolant temperature, the method performs the step of predicting S30 the FCS power demand (request) for a predetermined future time horizon. In addition, the method performs the step of the predicting S40 the FCS power capability for the time horizon if the current temperature of the coolant 24 is below the coolant temperature setpoint. Further, as illustrated in Fig. 5, if the FCS power demand (request) at any instant in the future time horizon is above the estimated power capability for that instant in the future time horizon, i.e. if there is a determined difference in power, the method comprises the step of controlling (regulating) S50 the power of the heater so as to control the evolution of the coolant temperature in the fluid circuit. That is, the control unit 90 is controlled to operate the heater 25 in response to the comparison so as to control the temperature of the coolant 24 in the fluid circuit, and thus the temperature of the FCS 20 during the upcoming time horizon.

In the method illustrated in Fig. 5, the step of predicting the power capability S40 corresponding to estimating the evolution of the FCS power capability is based on data indicating thermal mass and coolant volumes in the fluid circuit 23. The thermal mass and coolant volumes are input data for calculating the evolution of the coolant temperature which is then used for the estimation of the FCS power capability.

In one example, the step of predicting S30 the FCS power demand for the given time horizon comprises determining the FCS power demand based on traffic information, terrain information, gross combination weight data and speed limits data, while the step of predicting S40 the power capability of the FCS 20 for the given time horizon comprises determining the SOH of the FCS. Moreover, in this example, the step of predicting S40 the power capability of the FCS 20 for the given time horizon comprises estimating an expected evolvement of the temperature of the FCS 20 if the FCS 20 is operated according to the predicted FCS power demand during the given time horizon. As the evolvement of temperature may generally also change based on the SOH, the method in this example, also comprises determining SOH of the FCS. In generally, it has been observed that the SOH of the FCS has a negative impact on the evolvement of the temperature, i.e. less SOH means more heat from the FCS, and thus a faster evolvement of the temperature.

To sum up, in this example, the operation of predicting S40 the power capability of the FCS for the given time horizon comprises determining SOH of the FCS and, based on the determined SOH of the FCS, further estimating the expected evolvement of the temperature of the FCS 20 if the FCS 20 is operated according to the predicted FCS power demand during the given time horizon.

Subsequently, on the basis of the predicted power capability of the FCS and the predicted FCS power demand, the method comprises the step of operating S50 the heater so as to control the temperature of the FCS during the time horizon. As such, the method provides for determining how much power the FCS can provide and if the heater needs to be operated.

In addition, the disclosure relates to the vehicle 10 comprising the FCS 20 and the control unit 90 for performing the method 100 according to any one of the example embodiments as described in relation to the Figs. 1 to 5. In addition, the disclosure relates to a computer program comprising program code means for performing the steps of the method as described in relation to the Figs. 1 to 5, when the program is run on a computer. In addition, the disclosure relates to a computer readable medium carrying a computer program comprising program means for performing the steps of the method as described in relation to the Figs. 1 to 5 when the program means is run on a computer.

To sum up, there is provided a method 100 for controlling the temperature of the FCS 20 of the vehicle 10. The FCS 20 comprises at least one fuel cell 21 and the thermal management system 22 for the at least one fuel cell. The thermal management system 22 comprises the fluid circuit 23 for circulating the coolant 24 and further the heater 25 arranged to regulate the temperature of the coolant. The method is implemented by the control unit 90 and comprises predicting S30 an FCS power demand for a given time horizon; predicting S40 a power capability of the FCS for the given time horizon; and on the basis of said predicted power capability of the FCS and said predicted FCS power demand, operating S50 the heater so as to control the temperature of the FCS during said time horizon.

Thanks to the present disclosure, as exemplified by the example embodiments in Figs. 1 to 5, it becomes possible to provide an improved temperature control strategy for the FCS in which the temperature of the FCS is regulated by operating a heater for heating a coolant of the FCS on the basis of a predicted power capability of the FCS and a predicted FCS power demand.

While the method above has generally been described in relation to a system comprising one fuel cell stack 21, the method and system may likewise be configured to control cooling of a number of fuel cell stacks. In addition, it should be noted that the heater 50 can be located at several different positions in the fluid circuit in Fig. 2, and thus not necessarily in the cooler arrangement by-pass fluid flow path 28.

As mentioned above, it is to be noted that the steps of the method are typically performed by the control unit 90, during use of the vehicle. Thus, the control unit 90 is configured to perform any one of the steps of any one of the example embodiments as described above in relation to the Figs. 1 - 5. Accordingly, the vehicle 10 also comprises the control unit 90 for controlling various operations and functionalities of the FCS. The control unit 90 is here the electronic control unit of the vehicle 10. The control unit 90 generally comprises the processing circuitry 92. In addition, the control unit 90 generally comprises the storage memory 94.

The control unit 90 may include a microprocessor, microcontroller, programmable digital signal processor or another programmable device. Thus, each one of the control units comprises electronic circuits and connections (not shown) as well as processing circuitry (e.g. processing circuitry 82) such that the control unit can communicate with different parts of the truck such as the brakes, suspension, driveline, in particular the electric machine, FCS, a clutch, and a gearbox in order to at least partly operate the truck. Each one of the control units may comprise modules in either hardware or software, or partially in hardware or software and communicate using known transmission buses such as CAN-bus and/or wireless communication capabilities. The processing circuitry may be a general purpose processor or a specific processor. Each one of the control units comprises a non-transitory memory for storing computer program code and data upon. Thus, the skilled addressee realizes that each one of the control units may be embodied by many different constructions.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions. Likewise, software implementations could be accomplished with standard programming techniques with rule-based logic and other logic to accomplish the various connection steps, processing steps, comparison steps and decision steps.

Although the Figures may show a sequence the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

It is to be understood that the present disclosure is not limited to the embodiments described above and illustrated in the drawings; rather, the skilled person will recognize that many changes and modifications may be made within the scope of the appended claims. For example, although the present disclosure has mainly been described in relation to an electrical truck, the disclosure should be understood to be equally applicable for any type of electrical vehicle, in particular an electrical bus, an electrical car or the like. Variations to the disclosed embodiments can be understood and effected by the skilled addressee in practicing the claimed disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A method (100) for controlling a temperature of a fuel cell system, FCS, (20) of a vehicle (10), said FCS comprising at least one fuel cell (21) and a thermal management system (22) for the at least one fuel cell, said thermal management system (21) having a fluid circuit (23) for circulating a coolant (24) and further comprising a heater (25) arranged to regulate a temperature of said coolant,
said method comprising:
- predicting (S30) an FCS power demand for a given time horizon;
- predicting (S40) a power capability of the FCS for the given time horizon; and
- on the basis of said predicted power capability of the FCS and said predicted FCS power demand, operating (S50) the heater so as to control the temperature of said FCS during said time horizon.

2. Method according to claim 1, wherein predicting a power capability of the FCS for the given time horizon is initiated if a current temperature of said coolant is below a coolant temperature setpoint.

3. Method according claim 2, further comprising determining (S20) the current temperature of said coolant and comparing the determined current coolant temperature with the coolant temperature setpoint.

4. Method according claim 3, further comprising, if said determined current coolant temperature is above said coolant temperature setpoint, controlling (S52) said heater into a deactivated state.

5. Method according to any one of the preceding claims, wherein predicting (S40) a power capability of the FCS for the given time horizon comprises estimating an expected evolvement of the temperature of the FCS if said FCS is operated according to the predicted FCS power demand during the given time horizon.

6. Method according to any one of the preceding claims, wherein predicting (S40) a power capability of the FCS for the given time horizon comprises determining state-of-health, SOH, of the FCS.

7. Method according to any one of the preceding claims, further comprising comparing the predicted FCS power demand with said predicted FCS power capability; and if said predicted FCS power demand is above said predicted FCS power capability at any point of time in the time horizon, said method further comprising operating the heater in response to said comparison so as to control the temperature of said FCS during said given time horizon.

8. Method according to any one of the preceding claims, wherein the method is performed at a start-up of the FCS.

9. Method according to any one of the preceding claims, wherein predicting the FCS power demand for the given time horizon is at least partly based on route information describing at least a route segment from a starting point to an end point.

10. Method according to any one of the preceding claim 9, wherein predicting the FCS power demand for the given time horizon is at least partly based on a previous FCS power demand profile for the route segment.

11. Method according to any one of the preceding claims, wherein predicting the FCS power demand for the given time horizon is at least partly based on data relating to environmental conditions, and/or wherein predicting the FCS power demand for the given time horizon is at least partly based on data indicative of the gross combination weight of the vehicle.

12. A control unit (90) for a vehicle (10), arranged in communication with a fuel cell system, FCS, of a vehicle, and configured to perform a method according to any one of the preceding claims.

13. A vehicle (10) comprising a fuel cell system, FCS, and further a control unit according to claim 12.

14. A computer program comprising program code means for performing the steps of any one of claims 1 - 11 when said program is run on a computer.

15. A computer readable medium carrying a computer program comprising program means for performing the steps of any one of claims 1 - 11 when said program means is run on a computer.

## Patentansprüche

1. Verfahren (100) zum Regeln einer Temperatur eines Brennstoffzellensystems, FCS, (20) eines Fahrzeugs (10), wobei das FCS mindestens eine Brennstoffzelle (21) und ein Wärmemanagementsystem (22) für die mindestens eine Brennstoffzelle umfasst, wobei das Wärmemanagementsystem (22) einen Fluidkreislauf (23) zum Zirkulieren eines Kühlmittels (24) aufweist und ferner eine Heizvorrichtung (25) umfasst, die so angeordnet ist, dass sie eine Temperatur des Kühlmittels reguliert,
wobei das Verfahren Folgendes umfasst:
- Vorhersagen (S30) eines FCS-Leistungsbedarfs für einen gegebenen Zeitrahmen;
- Vorhersagen (S40) einer Leistungsabgabe des FCS für den gegebenen Zeitrahmen; und
- auf Basis der vorhergesagten Leistungsabgabe des FCS und des vorhergesagten FCS-Leistungsbedarfs, Betreiben (S50) der Heizvorrichtung, um die Temperatur des FCS während des Zeitrahmens zu regeln.

2. Verfahren nach Anspruch 1, wobei das Vorhersagen einer Leistungsabgabe des FCS für den gegebenen Zeitrahmen gestartet wird, wenn eine aktuelle Temperatur des Kühlmittels unter einem Sollwert für die Kühlmitteltemperatur liegt.

3. Verfahren nach Anspruch 2, das ferner das Bestimmen (S20) der aktuellen Temperatur des Kühlmittels und das Vergleichen der bestimmten aktuellen Kühlmitteltemperatur mit dem Sollwert für die Kühlmitteltemperatur umfasst.

4. Verfahren nach Anspruch 3, das ferner das Ansteuern (S52) der Heizvorrichtung in einen deaktivierten Zustand umfasst, wenn die bestimmte aktuelle Kühlmitteltemperatur über dem Sollwert für die Kühlmitteltemperatur liegt.

5. Verfahren nach einem der vorhergehenden Ansprüche, wobei das Vorhersagen (S40) einer Leistungsabgabe des FCS für den gegebenen Zeitrahmen das Schätzen einer erwarteten Entwicklung der Temperatur des FCS umfasst, wenn das FCS während des gegebenen Zeitrahmens gemäß dem vorhergesagten FCS-Leistungsbedarf betrieben wird.

6. Verfahren nach einem der vorhergehenden Ansprüche, wobei das Vorhersagen (S40) einer Leistungsabgabe des FCS für den gegebenen Zeitrahmen das Bestimmen des Gesundheitszustands, SOH, des FCS umfasst.

7. Verfahren nach einem der vorhergehenden Ansprüche, das ferner das Vergleichen des vorhergesagten FCS-Leistungsbedarfs mit der vorhergesagten FCS-Leistungsabgabe umfasst; und wobei, wenn der vorhergesagte FCS-Leistungsbedarf zu einem beliebigen Zeitpunkt innerhalb des Zeitrahmens über der vorhergesagten FCS-Leistungsabgabe liegt, das Verfahren ferner als Reaktion auf den Vergleich das Betreiben der Heizvorrichtung umfasst, um die Temperatur des FCS während des gegebenen Zeitrahmens zu regeln.

8. Verfahren nach einem der vorhergehenden Ansprüche, wobei das Verfahren bei der Inbetriebnahme des FCS durchgeführt wird.

9. Verfahren nach einem der vorhergehenden Ansprüche, wobei das Vorhersagen des FCS-Leistungsbedarfs für den gegebenen Zeitrahmen mindestens teilweise auf Routeninformationen basiert, die mindestens ein Routensegment von einem Startpunkt bis zu einem Endpunkt beschreiben.

10. Verfahren nach einem der vorhergehenden Ansprüche 9, wobei das Vorhersagen des FCS-Leistungsbedarfs für den gegebenen Zeitrahmen mindestens teilweise auf einem vorherigen FCS-Leistungsbedarfsprofil für das Routensegment basiert.

11. Verfahren nach einem der vorhergehenden Ansprüche, wobei das Vorhersagen des FCS-Leistungsbedarfs für den gegebenen Zeitrahmen mindestens teilweise auf Daten in Bezug auf Umgebungsbedingungen basiert und/oder wobei das Vorhersagen des FCS-Leistungsbedarfs für den gegebenen Zeitrahmen mindestens teilweise auf Daten basiert, die das Gesamtzuggewicht des Fahrzeugs angeben.

12. Steuereinheit (90) für ein Fahrzeug (10), die in Kommunikation mit einem Brennstoffzellensystem, FCS, eines Fahrzeugs angeordnet und dazu konfiguriert ist, ein Verfahren nach einem der vorhergehenden Ansprüche durchzuführen.

13. Fahrzeug (10), das ein Brennstoffzellensystem, FCS, und ferner eine Steuereinheit nach Anspruch 12 umfasst.

14. Computerprogramm, das ein Programmcodemittel zum Durchführen der Schritte nach einem der Ansprüche 1-11 umfasst, wenn das Programm auf einem Computer ausgeführt wird.

15. Computerlesbares Medium, das ein Computerprogramm enthält, das ein Programmmittel zum Durchführen der Schritte nach einem der Ansprüche 1-11 umfasst, wenn das Programmmittel auf einem Computer ausgeführt wird.

## Revendications

1. Procédé (100) de régulation de la température d'un système de pile à combustible, FCS, (20) d'un véhicule (10), ledit FCS comprenant au moins une pile à combustible (21) et un système de gestion thermique (22) pour l'au moins une pile à combustible, ledit système de gestion thermique (22) ayant un circuit de fluide (23) pour faire circuler un réfrigérant (24) et comprenant en outre un dispositif de chauffage (25) agencé pour réguler une température dudit réfrigérant, ledit procédé comprenant les étapes consistant à :
- prédire (S30) une demande de puissance FCS pour un horizon temporel donné ;
- prédire (S40) une capacité de puissance du SFD pour l'horizon temporel donné ; et
- sur la base de ladite capacité de puissance prédite du FCS et de ladite demande de puissance prédite du FCS, faire fonctionner (S50) le dispositif de chauffage de manière à réguler la température dudit FCS pendant ledit horizon temporel.

2. Procédé selon la revendication 1, dans lequel la prédiction d'une capacité de puissance du FCS pour l'horizon temporel donné est initiée si une température actuelle dudit réfrigérant est inférieure à un point de consigne de température du réfrigérant.

3. Procédé selon la revendication 2, comprenant en outre la détermination (S20) de la température actuelle dudit réfrigérant et la comparaison de la température actuelle déterminée du réfrigérant avec le point de consigne de température du réfrigérant.

4. Procédé selon la revendication 3, comprenant en outre, si ladite température actuelle déterminée du réfrigérant est supérieure audit point de consigne de température du réfrigérant, la commande (S52) dudit dispositif de chauffage pour le mettre dans un état désactivé.

5. Procédé selon l'une quelconque des revendications précédentes, dans lequel la prédiction (S40) d'une capacité de puissance du FCS pour l'horizon temporel donné comprend l'estimation d'une évolution attendue de la température du FCS si ledit FCS est actionné conformément à la demande de puissance du FCS prédite pendant l'horizon temporel donné.

6. Procédé selon l'une quelconque des revendications précédentes, dans lequel la prédiction (S40) d'une capacité de puissance du FCS pour l'horizon temporel donné comprend la détermination de l'état de marche, SOH, du FCS.

7. Procédé selon l'une quelconque des revendications précédentes, comprenant en outre la comparaison de la demande de puissance FCS prédite avec ladite capacité de puissance FCS prédite ; et si ladite demande de puissance FCS prédite est au-dessus de ladite capacité de puissance FCS prédite à n'importe quel moment dans l'horizon temporel, ledit procédé comprenant en outre le fonctionnement du dispositif de chauffage en réponse à ladite comparaison de manière à réguler la température dudit FCS pendant ledit horizon temporel donné.

8. Procédé selon l'une quelconque des revendications précédentes, dans lequel le procédé est exécuté au démarrage du FCS.

9. Procédé selon l'une quelconque des revendications précédentes, dans lequel la prédiction de la demande de puissance du FCS pour l'horizon temporel donné est au moins partiellement basée sur des informations d'itinéraire décrivant au moins un segment d'itinéraire d'un point de départ à un point d'arrivée.

10. Procédé selon la revendication précédente 9, dans lequel la prédiction de la demande de puissance du FCS pour l'horizon temporel donné est au moins partiellement basée sur un profil de demande de puissance du FCS précédent pour le segment d'itinéraire.

11. Procédé selon l'une quelconque des revendications précédentes, dans lequel la prédiction de la demande de puissance du FCS pour l'horizon temporel donné est au moins partiellement basée sur des données relatives aux conditions environnementales, et/ou la prédiction de la demande de puissance du FCS pour l'horizon temporel donné est au moins partiellement basée sur des données indicatives du poids total combiné du véhicule.

12. Unité de commande (90) pour véhicule (10), agencée en communication avec un système de pile à combustible, FCS, d'un véhicule, et configurée pour exécuter un procédé selon l'une quelconque des revendications précédentes.

13. Véhicule (10) comprenant un système de pile à combustible, FCS, et en outre une unité de commande selon la revendication 12.

14. Programme informatique comprenant un moyen de code de programme pour exécuter les étapes de l'une quelconque des revendications 1 à 11 lorsque ledit programme est exécuté sur un ordinateur.

15. Support lisible par ordinateur comportant un programme informatique comprenant un moyen de programme pour exécuter les étapes de l'une quelconque des revendications 1 à 11 lorsque ledit moyen de programme est exécuté sur un ordinateur.
